# EUROPEAN PATENT SPECIFICATION

(11) **EP 4 349 655 B1**
(45) Date of publication and mention of the grant of the patent: **18.06.2025**
(21) Application number: 23198963.3
(22) Date of filing: 22.09.2023
(51) Int. Cl.: B60R 7/04

(54) **A STORAGE CONSOLE FOR A VEHICLE**
ABLAGEKONSOLE FÜR EIN FAHRZEUG
CONSOLE DE RANGEMENT POUR VÉHICULE

(30) Priority: 29.09.2022 IN 202221056084
(43) Date of publication of application: 10.04.2024
(73) Proprietor: Faurecia India Private Limited, Bhosari, Pune 411026 (IN)
(72) Inventor: BHUJADE, Annasaheb, 411062 PUNE (IN)
(74) Representative: Lavoix

(56) References cited:
- EP-B1- 2 165 887
- CN-U- 204 586 688
- FR-A1- 2 937 294
- JP-U- S57 120 145
- US-A1- 2010 156 131

## Description

### Field of the Invention

The present disclosure relates to the field of a vehicle storage compartment. More specifically, the present invention relates to a storage console for a vehicle interior.

### Background of the Invention

Storage compartments or boxes are used inside vehicles particularly for storing articles, such as bottles, documents, coins, mobile phone, tablet and the like. Mostly, the storage boxes are arranged on the instrument panel or on a centre console of the vehicle for easy access for both the driver and the occupant. These centre console storage compartments, often act as an armrest for the vehicle passengers. The storage compartments in the centre console can be accessible only for the front row passengers.

There are mechanisms or secondary storage compartments provided on the centre console storage unit which can be accessible to the second-row passengers by sliding the console assembly or the secondary storage compartment. Such mechanism makes the centre console assembly complex and bulky.

The patent application FR 2 937 294 A1 describes a storage device having fixed and sliding consoles according to the preamble of claim 1. The storage device has a fixed central console and a sliding central console sliding relative to each other back and forth, where the consoles are laterally arranged in the front seat i.e. driver seat of a vehicle. The consoles are telescopic when the sliding console slides into the fixed console between a deployed position in which the sliding console extends behind the seat and a retracted position in which the sliding console is integrally opposite to the fixed console. However, the arrangement is bulky, consumes more space, and does not fulfil the requirements of the front passengers and the rear passengers.

Further, the patent application CN 204 586 688 U discloses a storage unit for a motor vehicle. The storage assembly includes upper and lower cover parts that are hingedly connected together and also hingedly connected, via the lower cover part, to an interior panel of the motor vehicle, such as a sidewall of a center console. When the storage assembly is in a fully deployed configuration, the upper and lower cover parts are arranged to form a substantially L-shaped support for transporting one or more objects.

Furthermore, the Japanese patent JP S57 120145 U describes a console box. The console box includes a lid plate arranged as the center armrest. The console box can be opened and closed 180 degrees rearward specifically, the lid plate can be opened and closed. Also, a secondary plate is provided on the back side of the lid plate that opens both sides to the left and right to form a table together with the lid plate. However, the said console box does not offer an adequate storage compartment for the rear passengers, especially in areas with limited space.

Therefore, there is a need of a compact arrangement of centre console assembly which can overcome the above drawback(s) and provide a storage console for the vehicle.

### Objects of the Invention

Some of the objectives of the present invention, which at least one embodiment herein satisfies are as listed herein below.

It is an object of the present invention to provide a storage console for a vehicle with two storage compartments accessible simultaneous to front row passengers and rear row passengers.

It is an object of the present invention to provide a storage console for a vehicle which has a foldable armrest unit to configure a tray to hold articles such as laptop, book and the like.

It is an object of the present invention to provide a storage console for a vehicle which has a compact arrangement to configure the storage compartment for the rear row passengers.

It is an object of the present invention to provide a storage console for a vehicle which has a simple mechanism for easy operation.

### Summary of the invention

According to the present invention there is provided a storage console for a vehicle interior. The storage console may be arranged adjacent/beside a front row seat of the vehicle. The arrangement of the storage console is advantageous for both front row passengers as well as rear seat passengers since the storage space of the storage console can be accessed by both row passengers.

The storage console may include at least one storage unit. The storage unit is adapted to store articles which can be accessible by the front row passengers. The storage unit is arranged adjacent/beside a front row seat of the vehicle. In an embodiment, the storage unit is fixed to the floor of the vehicle interior.

Further, the storage unit may be partially enclosed by a housing. The housing may cover at least one side portion of the storage unit and a back portion. The housing is slidably arranged on the storage unit. Specifically, the housing may be slidable linearly along a longitudinal plane of the storage unit between a first position and a second position. The first position is when the housing covers the storage unit and the second position is when housing is moved in a rearward position towards the second-row passengers. The housing configures a storage compartment in the second position for storing articles and the storage compartment is accessible to the second-row passengers. When the housing is in the second position, the front row passengers can access the front storage unit and the second-row passengers can access the storage compartment simultaneously.

Further, the housing has a lid for covering the storage unit. The lid is also moveable along with the housing when the housing moves between the first position and the second position. The lid is movably arranged on a portion of the housing such that in the first position of the housing the lid pivot around a pivotal axis to provide access to the storage unit. In the present embodiment, the lid is pivotally arranged on a top portion of the housing. When the housing is in the first position, the front row passengers can access the storage unit by lifting the lid around the pivotal axis.

The housing may have a collapsible sidewall portion movable between a stowed position and a deployed position when the housing is in the second position. The side wall portion may be arranged at an inner side portion of the housing. When the housing is moved rearwards or in the second position, the side wall portion moves to the deployed position away from the inner side portion of the housing. In the deployed position of the side wall portion, the housing configures the storage compartment.

Further, the side wall portion may flush to the inner wall portion of the housing in the stowed position. Specifically, the side wall portion may have a corrugated side portion which connects with the inner portion of the housing. The corrugated side portion facilitates the movement of the side wall portion between the deployed position and the stowed position. In the stowed position, the corrugated side portion collapses and facilitates the side wall portion to flush against the inner side of the housing.

When the housing slides from the second position to the first position, the second-row occupant can remove the articles from the storage compartment and can flushes the side wall portion to the stowed position. In an embodiment, the side wall portion may have a locking arrangement to keep the side wall portion stay in the stowed position. In an embodiment, the lid or the housing may have a magnetic arrangement to arrest the side wall portion in the stowed position. In another embodiment, the storage unit may have a secondary storage space to accommodate the side wall portion when the housing slides back to the first position.

Further, the housing may be slidable on a guide arranged on the floor of the vehicle or on a periphery of the storage unit. The guide can be a channel or a rail like structure to facilitate the sliding motion of the housing towards the second position.

Further, the storage console has an armrest mounted on a top portion of the lid. In an embodiment, the armrest has a foldable unit which is swivellable around a rotational axis. The foldable unit has a first armrest portion and a second armrest portion. The first armrest portion and the second armrest portion are substantially flat members which are adjoined together on a side portion. Specifically, the first armrest portion and the second armrest portion are pivotally connected to the side portion such that the first armrest portion is foldable over the second armrest portion. When the first armrest portion is unfolded, the first armrest portion aligns in the same plane of the second armrest portion configuring a rectangular tray for holding articles. By way of non-limitting example, the tray can be used for holding a laptop or book or bottles or glasses.

In an embodiment, the storage console includes a locking and unlocking unit. The locking unit locks the position of the housing according to the user requirement. Specifically, the locking unit may prevent the sliding movement of the housing when the storage compartment is used by the occupants.

### Brief Description of the Drawings

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.

In the figures, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
Figure 1 illustrates an exemplary view of a proposed storage console for a vehicle in accordance with the present invention;
Figure 2 illustrates a perspective view of the storage console in accordance with the present invention;
Figure 3 illustrates a side view of the storage console with the housing in a second position;
Figure 4 illustrates a top view of the storage console when the housing configures a storage compartment in the second position;
Figure 5 illustrates a perspective view of the storage console when the housing configures a storage compartment in the second position;
Figure 6 illustrates a back side view of the storage console when the housing configures a storage compartment in the second position; and
Figure 7 illustrates a top view of the storage console when the housing configures a storage compartment in the second position and when the foldable tray in a useful position.

### Detailed Description of the Invention

The following is a detailed description of embodiments of the disclosure depicted in the accompanying drawings. The disclosed embodiments are merely exemplary of the invention, which may be embodied in various forms. The embodiments are in such detail as to clearly communicate the disclosure. However, the amount of detail offered is not intended to limit the anticipated variations of embodiments; on the contrary, the intention is to cover all modifications, equivalents, and alternatives falling within scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

The present disclosure relates to a storage console arranged inside a vehicle interior.

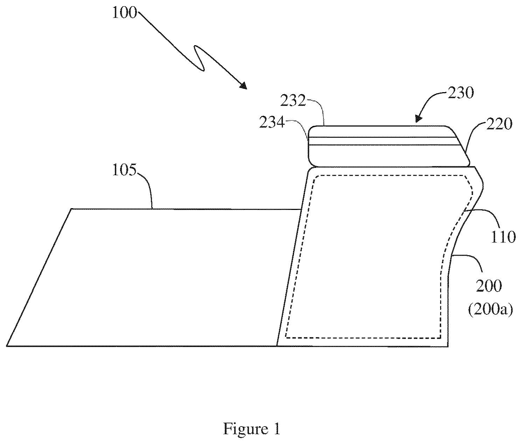

Referring now to figure 1, a storage console 100 for a vehicle interior in accordance with the present invention is illustrated. The storage console 100 is arranged adjacent/beside a front row seat of the vehicle. Specifically, the storage console 100 is located between a front left seat and a front right seat, wherein said front left and front right seats comprise a first row of seats within said passenger cabin of said vehicle. The arrangement of the storage console 100 is advantageous for both front row passengers as well as rear seat passengers since the storage space of the storage console 100 can be accessed by both row passengers.

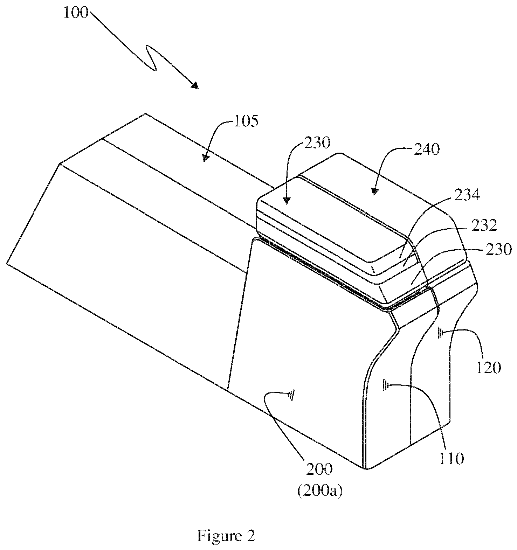

The storage console 100 includes a base 105 and at least one storage unit 110 as shown in figures 1 and 2. The storage unit 110 is fixed on the base 105. The storage unit 110 includes a storage space for storing articles therein and the storage unit 110 is adapted to store articles which can be accessible by the front row passengers. The storage unit 110 is arranged adjacent/beside a front row seat of the vehicle. In the present embodiment, the storage unit 110 is fixed to the floor of the vehicle interior.

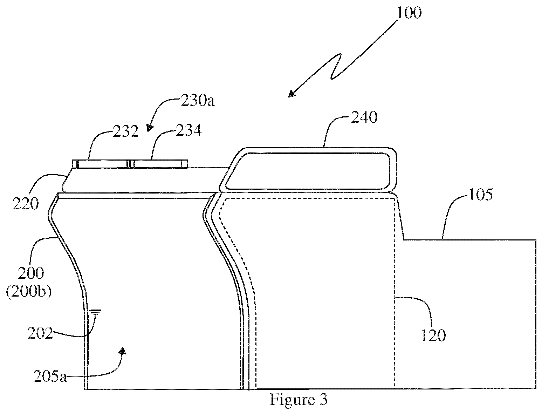

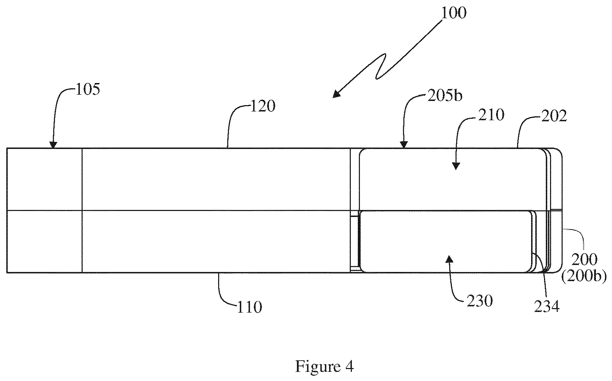

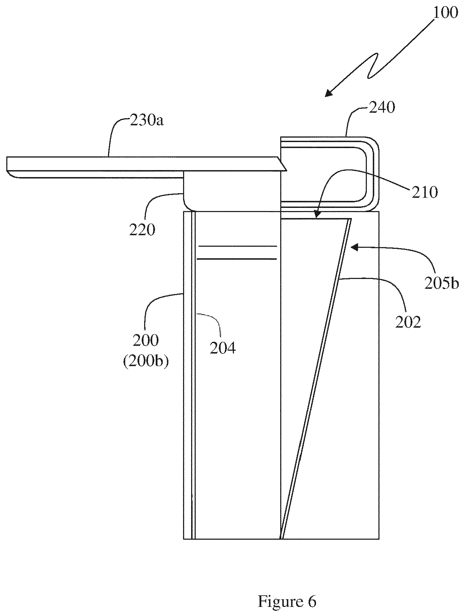

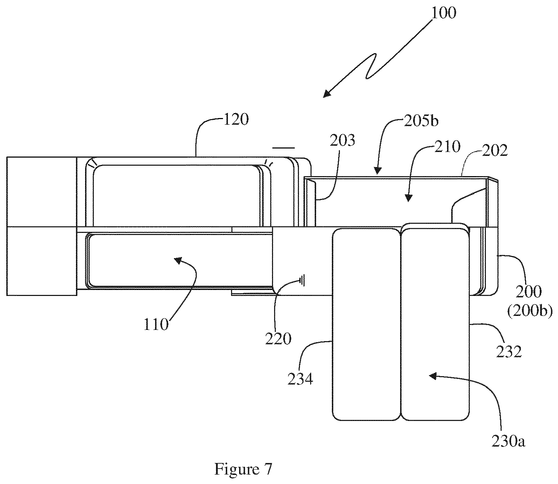

Further, the storage unit 110 is partially enclosed by a housing 200. The housing 200 covers at least one side portion of the storage unit 110 and a back portion. The housing 200 is slidably arranged on or over the storage unit 110. Specifically, the housing 200 is slidable linearly along a longitudinal plane of the storage unit 110 between a first position 200a and a second position 200b. The first position 200a is when the housing 200 covers the storage unit 110 as shown in figure 2. The second position 200b is when housing 200 is moved in a rearward position towards the second-row passengers as shown in figure 3. The housing 200 configures a storage compartment 210 in the second position 200b for storing articles and the storage compartment 210 is accessible to the second-row passengers as shown in figures 4, 5, 6 and 7. When the housing 200 is in the second position 200b, the front row passengers can access the front storage unit 110 and the second-row passengers can access the storage compartment 210 simultaneously.

In the present embodiment, the housing 200 has a lid 220 for covering the storage unit 110. The lid 220 is also moveable along with the housing 200 when the housing 200 moves between the first position 200a and the second position 200b. The lid 220 is movably arranged on a portion of the housing 200 such that in the first position 200a of the housing 200 the lid 220 pivot around a pivotal axis to provide access to the storage unit 110. In the present embodiment, the lid 220 is pivotally arranged on a top portion of the housing 200. When the housing 200 is in the first position 200a, the front row passengers can access the storage unit 110 by lifting the lid 220 around the pivotal axis.

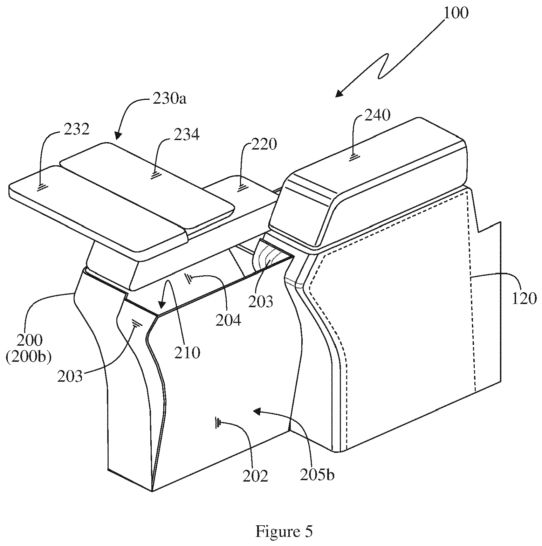

Referring to figure 5, the housing 200 has a sidewall portion 202 movable between a stowed position 205a figure 3 and a deployed position 205b when the housing 200 is in the second position 200b. The side wall portion 202 is arranged at an inner side portion of the housing 200. When the housing 200 is moved rearwards or in the second position 200b, the side wall portion 202 moves to the deployed position 205b away from the inner side portion of the housing 200. In the deployed position 205b of the side wall portion 202, the housing 200 configures the storage compartment 210 as shown in figures 5, 6 and 7.

Further, the side wall portion 202 flushes to the housing 200 in the stowed position 205a as shown in figure 3. Specifically, the side wall portion 202 has a corrugated side portion 203 which connects with an inner side wall 204 of the housing 200. The corrugated side portion 203 facilitates the movement of the side wall portion 202 between the deployed position 205b and the stowed position 205a. In the stowed position 205a, the corrugated side portion 203 collapses and facilitates the side wall portion 202 to flush against the inner side wall 204 of the housing 200. The movement of the side wall portion 202 can be controlled manually or by means of a motor. In the present embodiment, the side wall portion 202 is moved manually.

When the housing 200 slides from the second position 200b to the first position 200a, the second-row occupant can remove the articles from the storage compartment 210 and can flushes the side wall portion 202 to the stowed position 205a. In an embodiment, the side wall portion 202 may have a locking arrangement to keep the side wall portion 202 stay in the stowed position 205a. By way of non-limiting example, the housing 200 may have a magnetic arrangement to arrest the side wall portion 202 in the stowed position 205a. In another embodiment, the storage unit 110 may have a secondary storage space to accommodate the side wall portion 202 when the housing 200 slides back to the first position 200a.

In an embodiment, the side wall portion 202 has an articulated structure. When the housing 200 is in the first position 200a, the side wall portion 202 is in a collapsible state where the side wall portion 202 is stored on a back side portion of the front storage unit 110. There may be a plurality of joints which may joins together and expands to form the side wall portion 202 when the housing 200 slides to the second position 200b. When the housing 200 slides back to the first position 200a, the side wall portion 202 collapses and may get stored on the back side portion of the front storage unit 110.

Further, the housing 200 is slidable on a guide not shown arranged on the floor of the vehicle or on a periphery of the storage unit 110. The guide can be a channel or a rail like structure to facilitate the sliding motion of the housing 200 towards the second position 200b. It may be obvious to a person skilled in the art to configure any other obvious arrangement to provide sliding motion to the housing 200. The housing 200 can be operated manually or is electrically operable.

Referring now to figures 5, 6 and 7, the storage console 100 has an armrest 230 mounted on a top portion of the lid 220. In the present embodiment, the armrest 230 is a foldable unit which is swivellable around a rotational axis. The armrest 230 has a first armrest portion 232 and a second armrest portion 234. The first armrest portion 232 and the second armrest portion 234 are substantially flat members which are adjoined together on a side portion. Specifically, the first armrest portion 232 and the second armrest portion 234 are pivotally connected to the side portion such that the first armrest portion 232 is foldable over the second armrest portion 234. When the first armrest portion 232 is unfolded, the first armrest portion 232 aligns in the same plane of the second armrest portion 234 configuring a rectangular tray 230a for holding articles as shown in figures 5, 6 and 7. By way of non-limiting example, the tray can be used for holding a laptop or book or bottles or glasses.

In an embodiment, the storage console 100 includes a locking and unlocking unit not shown. The locking unit locks the position of the housing 200 according to the user requirement. Specifically, the locking unit may prevent the sliding movement of the housing 200 when the storage compartment 210 is used by the occupants. The locking unit may be a manual push lock or electrically driven lock or the like. When the storage compartment 210 is not in use, the occupant can unlock the position of the housing 200 to slide back the housing 200 towards the first position 200a.

Further, the housing 200 can be movable manually or is electrically operable. in an embodiment the storage console 100 has a handle to push or pull the housing 200 in between the first position 200a and the second position 200b. In another embodiment, the housing 200 is electrically operable.

In the present embodiment, the console unit 100 includes two storage units 110, 120 as shown in figures 2 and 3. Both the storage units 110, 120 are partially covered by housings 200, 300. Each housing 200, 300 can be pulled separately between a first position 200a and a second position 200b to configure respective storage compartments. Each storage compartments can be accessible to the rear row passengers. Further, each storage units 110, 120 can be accessible by lifting respective armrests 230, 240.

Therefore, the advantage of the present invention is to provide a storage console for a vehicle with two storage compartments accessible simultaneous to front row passengers and rear row passengers. The storage console has a foldable armrest unit to configure a tray to hold articles such as laptop, book and the like. It has a compact arrangement to configure the storage compartment for the rear row passengers. Also, the storage console has a simple mechanism for easy operation.

Moreover, in interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

## Claims

1. A storage console (100) for a vehicle comprising:
At least one storage unit (110) including a storage space for storing articles therein and adapted to be arranged adjacent/beside a front row seat of the vehicle;
a housing (200) at least partially enclosing the storage unit (110), the housing (200) is slidably arranged on/over the storage unit (110) to slide linearly along a longitudinal plane of the storage unit (110) between a first position (200a) and a second position (200b).
wherein the housing (200) has a lid (220) for covering the storage unit (110) such that the lid (220) is also moveable along with the housing (200) when the housing (200) moves between the first position (200a) and the second position (200b), **characterized in that** the lid (220) is movably arranged on a portion of the housing (200) such that in the first position (200a) of the housing (200) the lid (220) pivot around a pivotal axis to provide access to the storage unit (110).

2. The storage console (100) as claimed in claim 1, wherein the housing (200) has a sidewall portion (202) movable between a stowed position (205a) and a deployed position (205b) when the housing (200) is in the second position (200b), wherein the side wall portion (202) configures a storage compartment (210) in the deployed position (205b); and the side wall portion (202) flushes to the housing (200) in the stowed position (205a).

3. The storage console (100) as claimed in claim 1, wherein an armrest (230) is mounted on a top portion of the lid (220), the armrest (230) is a foldable unit which is swivellable around a rotational axis.

4. The storage console (100) as claimed in claim 3, wherein the armrest (230) has a first armrest portion (232) and a second armrest portion (234), the first armrest portion (232) and the second armrest portion (234) are pivotally connected such that the first armrest portion (232) is foldable over the second armrest portion (234).

5. The storage console (100) as claimed in claim 4, wherein when the first armrest portion (232) is unfolded, the first armrest portion (232) aligns in the same plane of the second armrest portion (234) configuring a rectangular tray for holding articles.

6. The storage console (100) as claimed in claim 2, wherein when the housing (200) is moved rearwards or in the second position (200b), the side wall portion (202) moves to the deployed position (205b) away from an inner side portion of the housing (200), in the deployed position (205b) of the side wall portion (202) the housing (200) configures the storage compartment (210).

7. The storage console (100) as claimed in claim 2, wherein the side wall portion (202) flushes to the inner side wall (204) of the housing (200) in the stowed position (205a).

8. The storage console (100) as claimed in claim 7, wherein the side wall portion (202) has a corrugated side portion (203) which connects with the inner portion of the housing (200), the corrugated side portion (203) facilitates the movement of the side wall portion (202) between the deployed position (205b) and the stowed position (205a).

9. The storage console (100) as claimed in any one of the preceding claims, wherein in the stowed position (205a), the corrugated side portion (203) collapses and facilitates the side wall portion (202) to flush against the inner side wall (204) of the housing (200).

10. The storage console (100) as claimed in any one of the preceding claims, wherein the side wall portion (202) has a locking arrangement to arrest the side wall portion (202) in the stowed position (205a).

11. The storage console (100) as claimed in any one of the preceding claims, wherein the housing (200) is slidable on a guide arranged on the floor of the vehicle or on a periphery of the storage unit (110).

12. The storage console (100) as claimed in any one of the preceding claims, wherein the storage console (100) includes a locking and an unlocking unit, the locking unit locks the position of the housing (200) and prevents the sliding movement of the housing (200) when the storage compartment (210) is in use.

## Patentansprüche

1. Aufbewahrungskonsole (100) für ein Fahrzeug, umfassend:
mindestens eine Aufbewahrungseinheit (110), die einen Stauraum zur Aufbewahrung von Gegenständen darin enthält und angrenzend an/neben einem Vordersitz des Fahrzeugs angeordnet werden kann;
ein Gehäuse (200), das die Aufbewahrungseinheit (110) mindestens teilweise umschließt, wobei das Gehäuse (200) verschiebbar an/über der Aufbewahrungseinheit (110) angeordnet ist, sodass es linear entlang einer Längsebene der Aufbewahrungseinheit (110) zwischen einer ersten Position (200a) und einer zweiten Position (200b) verschiebbar ist.
wobei das Gehäuse (200) einen Deckel (220) zum Abdecken der Aufbewahrungseinheit (110) aufweist, wobei der Deckel (220) auch zusammen mit dem Gehäuse (200) beweglich ist, wenn sich das Gehäuse (200) zwischen der ersten Position (200a) und der zweiten Position (200b) bewegt, **dadurch gekennzeichnet, dass** der Deckel (220) so beweglich auf einem Teil des Gehäuses (200) angeordnet ist, dass der Deckel (220) in der ersten Position (200a) des Gehäuses (200) um eine Drehachse schwenkt, um Zugang zur Aufbewahrungseinheit (110) zu ermöglichen.

2. Aufbewahrungskonsole (100) nach Anspruch 1, wobei das Gehäuse (200) einen Seitenwandabschnitt (202) aufweist, der sich zwischen einer Verstauposition (205a) und einer ausgezogenen Position (205b) bewegen lässt, wenn sich das Gehäuse (200) in der zweiten Position (200b) befindet, wobei der Seitenwandabschnitt (202) in der ausgezogenen Position (205b) ein Aufbewahrungsfach (210) bildet und der Seitenwandabschnitt (202) in der Verstauposition (205a) mit dem Gehäuse (200) bündig ist.

3. Aufbewahrungskonsole (100) nach Anspruch 1, wobei eine Armlehne (230) an einem oberen Abschnitt des Deckels (220) angebracht ist, wobei die Armlehne (230) eine klappbare Einheit ist, die um eine Drehachse schwenkbar ist.

4. Aufbewahrungskonsole (100) nach Anspruch 3, wobei die Armlehne (230) einen ersten Armlehnenteil (232) und einen zweiten Armlehnenteil (234) aufweist, wobei der erste Armlehnenteil (232) und der zweite Armlehnenteil (234) drehbar verbunden sind, sodass der erste Armlehnenteil (232) über den zweiten Armlehnenteil (234) klappbar ist.

5. Aufbewahrungskonsole (100) nach Anspruch 4, wobei, wenn der erste Armlehnenteil (232) umgeklappt ist, der erste Armlehnenteil (232) in der gleichen Ebene wie der zweite Armlehnenteil (234) ausgerichtet ist, wodurch eine rechteckige Ablage zur Aufnahme von Gegenständen gebildet wird.

6. Aufbewahrungskonsole (100) nach Anspruch 2, wobei, wenn das Gehäuse (200) nach hinten oder in die zweite Position (200b) bewegt wird, sich der Seitenwandabschnitt (202) weg von einem inneren Seitenabschnitt des Gehäuses (200) in die ausgezogene Position (205b) bewegt, wobei das Gehäuse (200) in der ausgezogenen Position (205b) des Seitenwandabschnitts (202) das Aufbewahrungsfach (210) ausbildet.

7. Aufbewahrungskonsole (100) nach Anspruch 2, wobei der Seitenwandabschnitt (202) in der Verstauposition (205a) bündig mit der inneren Seitenwand (204) des Gehäuses (200) abschließt.

8. Aufbewahrungskonsole (100) nach Anspruch 7, wobei der Seitenwandabschnitt (202) einen gewellten Seitenabschnitt (203) aufweist, der mit dem inneren Abschnitt des Gehäuses (200) verbunden ist, wobei der gewellte Seitenabschnitt (203) die Bewegung des Seitenwandabschnitts (202) zwischen der ausgezogenen Position (205b) und der Verstauposition (205a) erleichtert.

9. Aufbewahrungskonsole (100) nach einem der vorhergehenden Ansprüche, wobei, in der Verstauposition (205a), der gewellte Seitenabschnitt (203) zusammengeklappt ist und es so ermöglicht, dass der Seitenwandabschnitt (202) mit der inneren Seitenwand (204) des Gehäuses (200) bündig ist.

10. Aufbewahrungskonsole (100) nach einem der vorhergehenden Ansprüche, wobei der Seitenwandabschnitt (202) eine Verriegelungsanordnung aufweist, um den Seitenwandabschnitt (202) in der Verstauposition (205a) zu arretieren.

11. Aufbewahrungskonsole (100) nach einem der vorhergehenden Ansprüche, wobei das Gehäuse (200) auf einer am Fahrzeugboden oder an einem Umfang der Aufbewahrungseinheit (110) angeordneten Führung verschiebbar ist.

12. Aufbewahrungskonsole (100) nach einem der vorhergehenden Ansprüche, wobei die Aufbewahrungskonsole (100) eine Verriegelungs- und eine Entriegelungseinheit aufweist, wobei die Verriegelungseinheit die Position des Gehäuses (200) verriegelt und die Gleitbewegung des Gehäuses (200) verhindert, wenn das Aufbewahrungsfach (210) in Gebrauch ist.

## Revendications

1. Console de rangement (100) pour un véhicule comprenant :
Au moins une unité de stockage (110) comprenant un espace de stockage pour y ranger des articles et adaptée pour être placée à côté d'un siège de la première rangée du véhicule ;
un boîtier (200) renfermant au moins partiellement l'unité de stockage (110), le boîtier (200) étant disposé de manière coulissante sur/au-dessus de l'unité de stockage (110) pour glisser linéairement le long d'un plan longitudinal de l'unité de stockage (110) entre une première position (200a) et une seconde position (200b).
dans lequel le boîtier (200) a un couvercle (220) pour couvrir l'unité de stockage (110) de sorte que le couvercle (220) est également mobile avec le boîtier (200) lorsque le boîtier (200) se déplace entre la première position (200a) et la deuxième position (200b), **caractérisé en ce que** le couvercle (220) est disposé de manière mobile sur une partie du boîtier (200) de sorte que dans la première position (200a) du boîtier (200) le couvercle (220) pivote autour d'un axe de pivotement pour permettre l'accès à l'unité de stockage (110).

2. Console de rangement (100) selon la revendication 1, dans laquelle le boîtier (200) comporte une partie de paroi latérale (202) mobile entre une position rangée (205a) et une position déployée (205b) lorsque le boîtier (200) est dans la seconde position (200b), dans laquelle la partie de paroi latérale (202) configure un compartiment de stockage (210) dans la position déployée (205b) ; et la partie de paroi latérale (202) affleure le boîtier (200) dans la position rangée (205a).

3. Console de rangement (100) selon la revendication 1, dans laquelle un accoudoir (230) est monté sur une partie supérieure du couvercle (220), l'accoudoir (230) étant une unité pliable qui peut pivoter autour d'un axe de rotation.

4. Console de rangement (100) selon la revendication 3, dans laquelle l'accoudoir (230) comporte une première partie d'accoudoir (232) et une deuxième partie d'accoudoir (234), la première partie d'accoudoir (232) et la deuxième partie d'accoudoir (234) étant reliées de manière pivotante de sorte que la première partie d'accoudoir (232) puisse être repliée sur la deuxième partie d'accoudoir (234).

5. Console de rangement (100) selon la revendication 4, dans laquelle, lorsque la première partie de l'accoudoir (232) est dépliée, la première partie de l'accoudoir (232) s'aligne dans le même plan que la deuxième partie de l'accoudoir (234), configurant ainsi un plateau rectangulaire pour le rangement d'articles.

6. Console de rangement (100) selon la revendication 2, dans laquelle, lorsque le boîtier (200) est déplacé vers l'arrière ou dans la deuxième position (200b), la partie de la paroi latérale (202) se déplace vers la position déployée (205b) à l'écart d'une partie latérale intérieure du boîtier (200), dans la position déployée (205b) de la partie de la paroi latérale (202), le boîtier (200) configure le compartiment de stockage (210).

7. Console de rangement (100) selon la revendication 2, dans laquelle la partie de la paroi latérale (202) affleure la paroi latérale intérieure (204) du boîtier (200) en position de rangement (205a).

8. Console de rangement (100) selon la revendication 7, dans laquelle la partie de la paroi latérale (202) a une partie latérale ondulée (203) qui se connecte à la partie intérieure du boîtier (200), la partie latérale ondulée (203) facilite le mouvement de la partie de la paroi latérale (202) entre la position déployée (205b) et la position rangée (205a).

9. Console de rangement (100) selon l'une quelconque des revendications précédentes, dans laquelle, en position de rangement (205a), la partie latérale ondulée (203) s'affaisse et permet à la partie de la paroi latérale (202) d'affleurer la paroi latérale intérieure (204) du boîtier (200).

10. Console de rangement (100) selon l'une quelconque des revendications précédentes, dans laquelle la partie de la paroi latérale (202) comporte un dispositif de verrouillage pour arrêter la partie de la paroi latérale (202) dans la position de rangement (205a).

11. Console de rangement (100) selon l'une quelconque des revendications précédentes, dans laquelle le boîtier (200) est coulissant sur un guide disposé sur le plancher du véhicule ou sur une périphérie de l'unité de stockage (110).

12. Console de rangement (100) selon l'une quelconque des revendications précédentes, dans laquelle la console de rangement (100) comprend une unité de verrouillage et une unité de déverrouillage, l'unité de verrouillage bloquant la position du boîtier (200) et empêchant le mouvement de glissement du boîtier (200) lorsque le compartiment de rangement (210) est en cours d'utilisation.
